(19) Europäisches Patentamt
European Patent Office
Office européen des brevets

(11) **EP 3 681 777 B1**

(12) **EUROPÄISCHE PATENTSCHRIFT**

(45) Veröffentlichungstag und Bekanntmachung des Hinweises auf die Patenterteilung:
**16.06.2021   Patentblatt 2021/24**

(21) Anmeldenummer: **18793600.0**

(22) Anmeldetag: **16.10.2018**

(51) Int Cl.:
*B61L 1/08* (2006.01)          *B61L 1/16* (2006.01)
*G01V 3/10* (2006.01)

(86) Internationale Anmeldenummer:
**PCT/EP2018/078139**

(87) Internationale Veröffentlichungsnummer:
**WO 2019/096514 (23.05.2019 Gazette 2019/21)**

(54) **SENSOREINRICHTUNG**

SENSOR DEVICE

DISPOSITIF DE DÉTECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.11.2017   DE 102017220281**

(43) Veröffentlichungstag der Anmeldung:
**22.07.2020   Patentblatt 2020/30**

(73) Patentinhaber: **Siemens Mobility GmbH**
**81739 München (DE)**

(72) Erfinder: **FREISE, Rainer**
**38124 Braunschweig (DE)**

(56) Entgegenhaltungen:
**DE-A1-102009 053 257     DE-A1-102012 212 939**
**DE-A1-102014 207 409**

**Beschreibung**

Die Erfindung bezieht sich auf eine Sensoreinrichtung zum Erfassen von Magnetfeldänderungen, insbesondere zur Detektion von Objekten, die sich der Sensoreinrichtung nähern oder diese passieren, und auf eine Anordnung umfassend eine Schiene und eine solche Sensoreinrichtung.

Eine Sensoreinrichtung, die auf der Erfassung einer Magnetfeldänderung infolge eines ein Gleis überfahrenden Eisenrades eines Schienenfahrzeugs beruht, ist beispielsweise in der deutschen Offenlegungsschrift DE 101 37 519 A1 und auch in der Druckschrift DE 10 2014 207 409 A1 beschrieben.

Im Bereich der Eisenbahntechnik werden magnetische Störfelder in signifikantem Umfang durch elektrische Schienenströme hervorgerufen, die von elektrischen Schienenfahrzeugen bzw. elektrischen Lokomotiven in das Gleis eingespeist werden.

Der Erfindung liegt die Aufgabe zugrunde, eine Sensoreinrichtung anzugeben, die für magnetische Störfelder möglichst unempfindlich ist und auch im Falle eines Störfeldeinflusses eine zuverlässige Objekterkennung ermöglicht.

Diese Aufgabe wird erfindungsgemäß durch eine Sensoreinrichtung mit den Merkmalen gemäß Patentanspruch 1 gelöst. Vorteilhafte Ausgestaltungen der erfindungsgemäßen Sensoreinrichtung sind in Unteransprüchen angegeben.

Danach ist erfindungsgemäß vorgesehen, dass die Sensoreinrichtung eine Empfangsspule, eine bezogen auf die Längsrichtung der Sensoreinrichtung vor oder hinter der Empfangsspule angeordnete wechselstromgespeiste Sendespule und zwei Kompensationsspulen, von denen eine bezogen auf die Längsrichtung vor und die andere hinter der Sendespule angeordnet ist, umfasst, die zwei Kompensationsspulen jeweils von dem von der Sendespule erzeugten Magnetfeld durchsetzt werden und elektrisch derart in Reihe verschaltet sind, dass die durch das Magnetfeld der Sendespule induzierten Spannungen in den beiden Kompensationsspulen vorzeichenverschieden sind und die Empfangsspule und die zwei Kompensationsspulen elektrisch in Reihe geschaltet sind, wobei die elektrische Polung der Empfangsspule und der zwei Kompensationsspulen derart gewählt ist, dass ein auf die Empfangsspule und die zwei Kompensationsspulen einwirkendes magnetisches Störfeld in der Empfangsspule eine Spannung mit einem anderen Vorzeichen als in Summe in den beiden Kompensationsspulen induziert.

Ein wesentlicher Vorteil der erfindungsgemäßen Sensoreinrichtung ist darin zu sehen, dass die Anordnung der zwei Kompensationsspulen, die elektrische Verschaltung der Kompensationsspulen mit der Empfangsspule und die daraus resultierende Vorzeichenverschiedenheit der Spannungen es ermöglichen, ein Störfeld (z. B. Magnetfeld eines Schienenstromes), das die Spulen durchsetzt, bei der Signalerfassung vollständig oder zumindest deutlich zu unterdrücken.

Die Sensoreinrichtung erzeugt im Falle einer festgestellten Magnetfeldänderung vorzugsweise ein Objekterkennungssignal, das ein sich annäherndes oder vorbeibewegendes Objekt anzeigt. Das Objekterkennungssignal kann beispielsweise erzeugt werden, wenn die an der Reihenschaltung der Empfangsspule und der Kompensationsspulen abfallende elektrische Spannung eine vorgegebene Schwelle erreicht oder überschreitet oder sich abrupt ändert.

Die Längsachse der Sendespule liegt vorzugsweise parallel oder zumindest im Wesentlichen parallel zur Längsrichtung der Sensoreinrichtung oder bildet selbst die Längsrichtung der Sensoreinrichtung.

Die Längsachse der Empfangsspule und die der zwei Kompensationsspulen sind vorzugsweise jeweils senkrecht oder zumindest im Wesentlichen senkrecht zur Längsachse der Sendespule ausgerichtet.

Die zwei Kompensationsspulen sind bevorzugt jeweils derart angeordnet und/oder dimensioniert, dass das von der Sendespule erzeugte Magnetfeld in den beiden Kompensationsspulen gleich große Spannungen mit unterschiedlichem Vorzeichen (entspricht einem Phasenversatz von 180°) induziert.

Die zwei Kompensationsspulen sind vorzugsweise baugleich und bezüglich der Sendespule spiegelsymmetrisch angeordnet.

Auch wird es als vorteilhaft angesehen, wenn die Empfangsspule und die zwei Kompensationsspulen derart angeordnet und/oder dimensioniert sind, dass die von dem magnetischen Störfeld in der Empfangsspule induzierte Spannung so groß wie die Summenspannung ist, die durch die in den zwei Kompensationsspulen induzierten Spannungen gebildet wird, und die durch das Störfeld induzierte Spannung an der Reihenschaltung bestehend aus der Empfangsspule und den zwei Kompensationsspulen Null oder zumindest näherungsweise Null beträgt.

Bezüglich der elektrischen Verschaltung der Spulen wird es als vorteilhaft angesehen, wenn zumindest ein Kondensator parallel zu der Reihenschaltung der zwei Kompensationsspulen geschaltet ist und mit diesen einen Kompensationsschwingkreis bildet, zumindest ein Kondensator parallel zu der Empfangsspule geschaltet ist und mit dieser einen Empfangsschwingkreis bildet, und die Resonanzfrequenz des Kompensationsschwingkreises und die Resonanzfrequenz des Empfangsschwingkreises gleich sind oder sich zumindest der Resonanzfrequenzbereich des Kompensationsschwingkreises mit dem Resonanzfrequenzbereich des Empfangsschwingkreises überlappt.

Die Sensoreinrichtung kann zweikanalig ausgeführt sein. Die zwei erwähnten Kompensationsspulen und die erwähnte Empfangsspule bilden in diesem Falle vorzugsweise einen ersten Kanal der Sensoreinrichtung. Zwei weitere Kompensationsspulen und eine weitere Empfangsspule bilden vorzugsweise einen zweiten Kanal der Sensoreinrichtung, wobei eine der zwei weiteren Kompensationsspulen vor und die andere hinter der Sendespule angeordnet ist und die Sendespule zwischen den zwei Empfangsspulen angeordnet ist.

Im Übrigen kann in vorteilhafter Weise vorgesehen sein, dass die Kompensationsspulen oder zumindest eine davon und/oder die Empfangsspule(n) jeweils durch zwei oder mehr Teilspulen gebildet sind, die miteinander elektrisch verschaltet sind.

Die Erfindung bezieht sich darüber hinaus auf eine Anordnung mit den Merkmalen gemäß Patentanspruch 9.

Vorteilhaft ist es, wenn die Sensoreinrichtung derart an der Schiene montiert ist, dass die Längsrichtung der Sensoreinrichtung und/oder die Längsrichtung (bzw. Längsachse) der Sendespule der Sensoreinrichtung der Schienenlängsrichtung entspricht.

Die Empfangsspule oder Empfangsspulen und die Sendespule liegen vorzugsweise in derselben horizontalen Ebene. Die Kompensationsspulen liegen vorzugsweise ebenfalls in einer horizontalen Ebene, sei es in derselben Ebene wie die Sendespule oder in einer anderen, insbesondere dazu parallelen, Ebene.

Bei einer bevorzugten Ausgestaltung ist vorgesehen, dass der Abstand der Kompensationsspulen vom Schienenkopf größer als der Abstand der Empfangsspule oder Empfangsspulen ist. Bei einer solchen Ausgestaltung ist es von Vorteil, wenn die Kompensationsspulen in einer horizontalen Ebene liegen, die tiefer liegt als die horizontale Ebene, in der die Empfangsspule oder Empfangsspulen und die Sendespule liegen.

Bei einer als besonders vorteilhaft angesehenen Ausführungsvariante ist vorgesehen, dass die Empfangsspule oder Empfangsspulen und die Kompensationsspulen jeweils gegenüber der Horizontalen bzw. die Längsachsen dieser Spulen relativ zur Vertikalen geneigt sind, wobei die Empfangsspule oder Empfangsspulen dem Schienenkopf zugewandt sind und die Kompensationsspulen dem Schienenkopf abgewandt sind.

Die Erfindung wird nachfolgend anhand von Ausführungsbeispielen näher erläutert; dabei zeigen beispielhaft

Figur 1     eine Eisenbahnschiene, an der ein Ausführungsbeispiel für eine einkanalige Sensoreinrichtung angebracht ist,

Figur 2     die elektrische Verschaltung der Komponenten der Sensoreinrichtung gemäß Figur 1 in Form eines elektrischen Schaltbildes, und

Fig. 3-6    Ausführungsbeispiele für zweikanalige Sensoreinrichtungen, die an einer Schiene montiert sind.

In den Figuren werden der Übersicht halber für identische oder vergleichbare Komponenten stets dieselben Bezugszeichen verwendet.

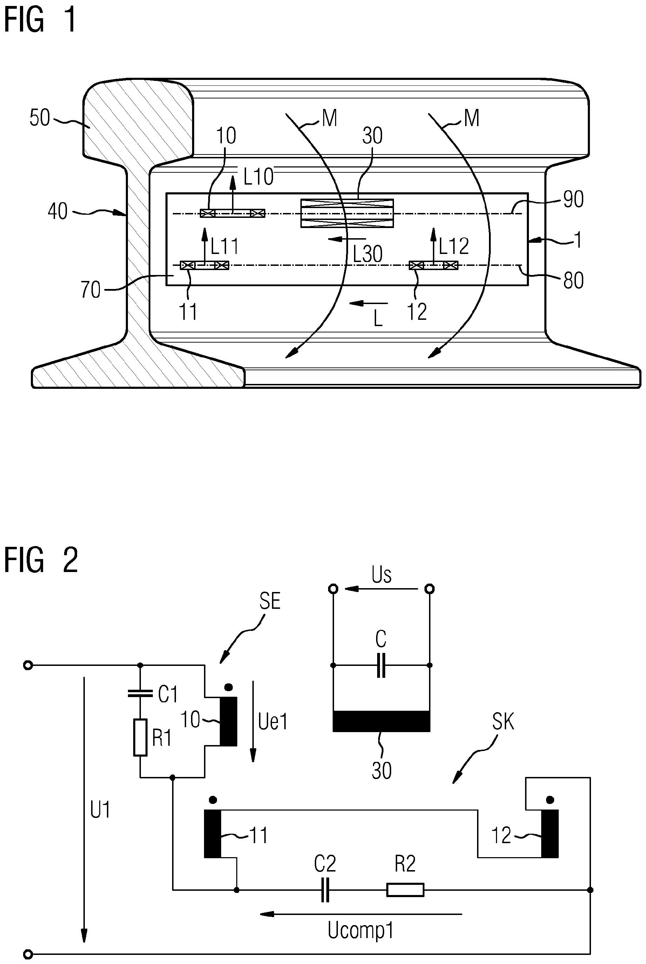

Die Figur 1 zeigt ein Ausführungsbeispiel für eine einkanalige Sensoreinrichtung 1, die zum Erfassen von Magnetfeldänderungen und zum Erfassen von Objekten wie beispielsweise Eisenrädern von Schienenfahrzeugen geeignet ist. Im Falle einer Objekterkennung erzeugt die Sensoreinrichtung 1 ein Objekterkennungssignal.

Die Sensoreinrichtung 1 umfasst eine Empfangsspule 10, zwei Kompensationsspulen 11, 12 und eine Sendespule 30. Die Sendespule wird mit einer Wechselspannung Us (vgl. Fig. 2) betrieben, parallel zu der Sendespule kann ein Kondensator C geschaltet sein (vgl. Fig. 2).

Die Empfangsspule 10 kann - bezogen auf die Längsrichtung L der Sensoreinrichtung 1 - vor oder hinter der Sendespule 30 angeordnet sein. Bei dem Ausführungsbeispiel gemäß Figur 1 befindet sich die Empfangsspule 10 in Längsrichtung L betrachtet hinter der Sendespule 30. Die Längsachse L30 der Sendespule 30 legt die Längsrichtung L der Sensoreinrichtung fest.

Eine der zwei Kompensationsspulen 11 und 12 - wieder bezogen auf die Längsrichtung L - liegt vor und die andere hinter der Sendespule 30.

Die Sensoreinrichtung 1 ist an einer Seitenwand einer Schiene 40 angebracht, die zum Führen eines Schienenfahrzeugs geeignet ist und beispielsweise eine Eisenbahnschiene sein kann. Die Sensoreinrichtung 1 befindet sich unterhalb des Schienenkopfes 50 der Schiene 40. Die Komponenten der Sensoreinrichtung 1 sind vorzugsweise in einem Gehäuse 70 untergebracht, das an der Seitenwand der Schiene 40 befestigt, beispielsweise angeschraubt, ist.

In der Figur 1 ist darüber hinaus ein magnetisches Störfeld M dargestellt, das beispielsweise durch einen durch die Schiene 40 hindurchfließenden elektrischen Schienenstrom hervorgerufen werden kann. Ein solcher Schienenstrom tritt in der Regel auf, wenn ein elektrisch betriebenes Schienenfahrzeug die Schiene 40 befährt.

Bei dem Ausführungsbeispiel gemäß Figur 1 ist die Längsachse L10 der Empfangsspule 10, die Längsachse L11 der Kompensationsspule 11 und die Längsachse L12 der Kompensationsspule 12 senkrecht oder zumindest im Wesentlichen senkrecht ($\pm$ 15°) zur Längsrichtung L der Sensoreinrichtung 10 ausgerichtet.

Mit Blick auf eine Detektion von auf der Schiene 40 fahrenden Fahrzeugen ist die Anordnung der Sensoreinrichtung 1 an der Schiene 40 derart gewählt, dass die Längsrichtung L der Sensoreinrichtung 1 und damit die Längsachse L30 der Sendespule 30 parallel zur Schienenlängsrichtung der Schiene 40 liegt.

Das von der Sendespule 30 erzeugte Magnetfeld erzeugt in den beiden Kompensationsspulen vorzugsweise gleichgroße Spannungen mit unterschiedlichen Vorzeichen. Die unterschiedlichen Vorzeichen der Spannungen ergeben sich bereits aus dem Umstand, dass eine der Kompensationsspulen vor und die andere hinter der Sendespule 30 angeordnet ist und insofern die Richtung des Magnetfeldes in den beiden Kompensationsspulen 11 und 12 unterschiedlich ist. Gleichgroße induzierte Spannungen durch das Magnetfeld der Sendespule 30 lassen sich besonders einfach erreichen, wenn die zwei Kompensationsspulen 11 und 12 baugleich sind und bezüglich der Sendespule 30 spiegelsymmetrisch angeordnet sind.

Um Detektionsfehler zu vermeiden bzw. den Einfluss des magnetischen Störfelds M auf die Erzeugung eines Objekterkennungssignals zu minimieren, sind die Anordnung und Dimensionierung der Empfangsspule 10 auf die Anordnung und Dimensionierung der beiden Kompensationsspulen 11 und 12 abgestimmt, und zwar derart, dass die von dem magnetischen Störfeld M in der Empfangsspule 10 induzierte Spannung so groß wie die Summenspannung ist, die von dem magnetischen Störfeld M in den zwei Kompensationsspulen 11 und 12 induziert wird, und darüber hinaus das entgegengesetzte Vorzeichen aufweist.

Die beiden Kompensationsspulen 11 und 12 liegen vorzugsweise in derselben Ebene, die in der Figur 1 mit dem Bezugszeichen 80 gekennzeichnet ist. Die Empfangsspule 10 und die Sendespule 30 liegen vorzugsweise ebenfalls in einer gemeinsamen Ebene, die in der Figur 1 das Bezugszeichen 90 trägt. Bei dem Ausführungsbeispiel gemäß Figur 1 liegt die Ebene 80 räumlich unterhalb der Ebene 90. Mit anderen Worten ist bei dem Ausführungsbeispiel gemäß Figur 1 der Abstand der Kompensationsspulen 11 und 12 vom Schienenkopf 50 größer als der Abstand der Empfangsspule 10 und der Sendespule 30 vom Schienenkopf.

Die Figur 2 zeigt die elektrische Verschaltung der Spulen der Sensoreinrichtung 1 näher im Detail. Es lässt sich erkennen, dass die zwei Kompensationsspulen 11 und 12 elektrisch in Reihe geschaltet sind, und zwar derart, dass die durch das Magnetfeld der Sendespule 30 induzierten Spannungen in den beiden Kompensationsspulen 11 und 12 unterschiedliche Vorzeichen aufweisen. Das Magnetfeld der Sendespule 30 führt somit zu keiner Summenspannung (Kompensationsspannung) Ucompl an der Reihenschaltung der zwei Kompensationsspulen 11 und 12. Darüber hinaus zeigt die Figur 2, dass die Empfangsspule 10 und die Reihenschaltung aus den zwei Kompensationsspulen 11 und 12 ebenfalls elektrisch in Reihe geschaltet sind, wobei die elektrische Polung der Spulen derart gewählt ist, dass ein auf die Empfangsspule 10 und die zwei Kompensationsspulen 11 und 12 einwirkendes magnetisches Störfeld M (vgl. Figur 1) in der Empfangsspule 10 eine Spannung mit einem anderen Vorzeichen als in den beiden Kompensationsspulen 11 und 12 induziert. Vorteilhaft ist es, wenn die durch das Störfeld M induzierte Spannung Ue1 in der Empfangsspule 10 so groß ist wie die Summenspannung Ucompl an der Reihenschaltung aus den zwei Kompensationsspulen 11 und 12; in diesem Falle ist die Gesamtspannung U1 durch das Störfeld M Null oder zumindest näherungsweise Null:

$$U1 = Ucomp1 + Ue1 \approx 0$$

Die Unterschiedlichkeit der Vorzeichen der Spannungen Ucompl und Ue1 - im Falle einer Spannungsinduktion durch das magnetische Störfeld M - wird durch die in der Figur 2 gezeigte elektrische Verschaltung der Spulen relativ zueinander erreicht.

Parallel zu der Empfangsspule 10 liegt vorzugsweise ein erster Kondensator C1, und parallel zu der Reihenschaltung aus den Kompensationsspulen 11 und 12 liegt vorzugsweise ein zweiter Kondensator C2. Der erste Kondensator C1 bildet mit der Empfangsspule 10 einen Empfangsschwingkreis SE mit einer Resonanzfrequenz f1. Der zweite Kondensator C2 bildet mit der Reihenschaltung aus den beiden Kompensationsspulen 11 und 12 einen Kompensationsschwingkreis SK mit einer Resonanzfrequenz f2.

Mit Blick auf eine gute Kompensationswirkung durch die beiden Kompensationsspulen 11 und 12 ist es von Vorteil, wenn die Resonanzfrequenz f1 des Empfangsschwingkreises SE und die Resonanzfrequenz f2 des Kompensationsschwingkreises SK gleichgroß sind oder sich die Resonanzfrequenzbereiche der beiden Schwingkreise zumindest überlappen.

Zur Bedämpfung der Schwingkreise SE und SK können Widerstände R1 bzw. R2 mit den Kondensatoren C1 und C2 in Reihe geschaltet werden.

Die Gesamtspannung U1 an der Reihenschaltung der Spulen 10, 11 und 12 kann für die Erzeugung eines Objekterkennungssignals ausgewertet werden: Beispielsweise kann das Objekterkennungssignal erzeugt werden, wenn sich die Gesamtspannung U1 sprungartig ändert oder einen vorgegebenen Schwellenwert erreicht oder überschreitet.

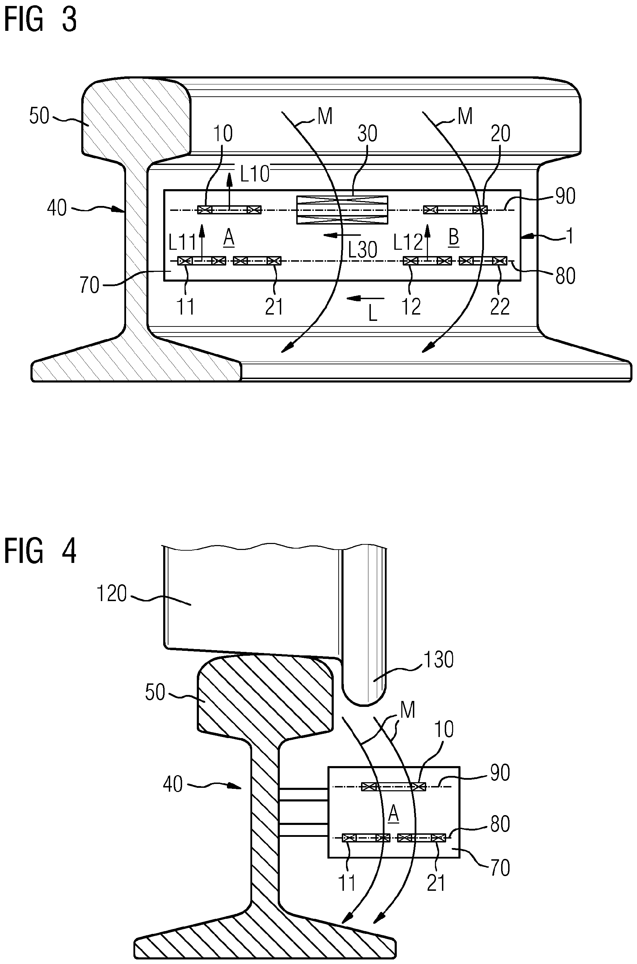

Die Figur 3 zeigt ein Ausführungsbeispiel für eine zweikanalige Sensoreinrichtung 1, die an einer Schiene 40 montiert ist. Im Unterschied zu der Sensoreinrichtung 1 gemäß Figur 1 ist die Sensoreinrichtung 1 gemäß Figur 3 zweikanalig ausgebildet und weist zwei Empfangskanäle A und B auf. Der Empfangskanal A wird durch die Empfangsspule 10 und die beiden Kompensationsspulen 11 und 12 gebildet, deren Anordnung, Funktionsweise und elektrische Verschaltung bereits im Zusammenhang mit den Figuren 1 und 2 erläutert worden sind.

Der Kanal B der Sensoreinrichtung 1 wird durch eine weitere Empfangsspule 20 sowie zwei weitere Kompensationsspulen 21 und 22 gebildet, deren Anordnung spiegelsymmetrisch zu der Anordnung der Spulen des Kanals A ist. Die Ausführungen im Zusammenhang mit der Empfangsspule 10 und den Kompensationsspulen 11 und 12 im Zusammenhang mit den Figuren 1 und 2 gelten somit für die zweite Empfangsspule 20 und die weiteren Kompensationsspulen 21 und 22 entsprechend.

Bei dem Ausführungsbeispiel gemäß Figur 3 liegen die Kompensationsspulen 11, 12, 21 und 22 in derselben Ebene 80, und zwar in Längsrichtung L der Sensoreinrichtung 1 bzw. in Längsrichtung der Schiene 40 gesehen hintereinander.

Die Figur 4 zeigt ein weiteres Ausführungsbeispiel für eine zweikanalige Sensoreinrichtung 1, die von einem Radkranz 130 eines Eisenrades 120 überfahren wird. Die Sensoreinrichtung 1 gemäß Figur 4 weist die im Zusammenhang mit der Figur 3 bereits erläuterten Komponenten auf, also eine Sendespule 30, zwei Empfangsspulen 10 und 20 sowie vier Kompensationsspulen 11, 12, 21 und 22. Bezüglich der Funktionsweise der Spulen gelten die Ausführungen im Zusammenhang mit den Figuren 1 bis 3 für das Ausführungsbeispiel gemäß Figur 4 entsprechend.

Im Unterschied zu dem Ausführungsbeispiel gemäß Figur 3 liegen die Kompensationsspulen bei der Ausführungsvariante gemäß Figur 4 paarweise nebeneinander (bei Blick entlang der Schienenlängsrichtung). So lässt sich erkennen, dass die Kompensationsspulen 11 und 21 zwar in derselben Ebene 80 liegen, jedoch der Abstand der Kompensationsspule 11 von der Schiene 40 kleiner ist als der Abstand der Kompensationsspule 21. Die Kompensationsspule 11 kann somit als innenliegende Kompensationsspule und die Kompensationsspule 21 als außenliegende Kompensationsspule bezeichnet werden. Die Kompensationsspulen 12 und 22 sind in analoger Weise nebeneinander angeordnet.

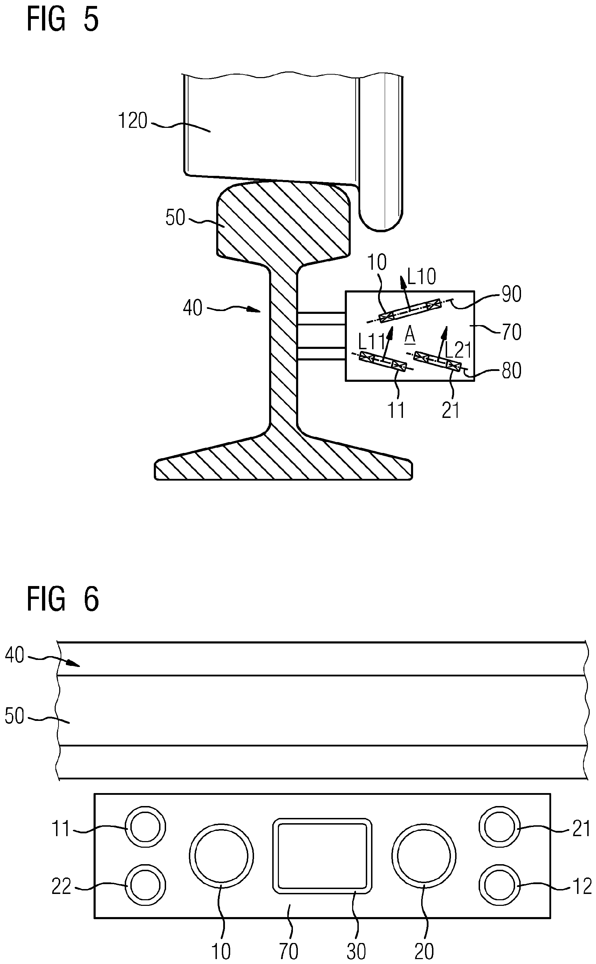

Die Figur 5 zeigt ein Ausführungsbeispiel für eine zweikanalige Sensoreinrichtung 1, bei der die Ebenen 80 und 90, in denen die Empfangsspulen und die Kompensationsspulen liegen, jeweils gegenüber der Horizontalen geneigt sind; die Längsachsen der Empfangsspule und der Kompensationsspulen sind somit gegenüber der Vertikalen geneigt. So lässt sich in der Figur 5 erkennen, dass die Empfangsspule 10 bzw. deren Längsachse L10 dem Schienenkopf 50 der Schiene 40 zugewandt ist, wohingegen die Kompensationsspulen 11 und 21 bzw. deren Längsachsen L11 und L21 vom Schienenkopf 50 abgewandt sind. Die in der Figur 5 nicht gezeigte Empfangsspule 20 und die ebenfalls nicht gezeigten Kompensationsspulen 12 und 22 sind ebenfalls in entsprechender Weise geneigt angeordnet.

Durch die Neigung der Empfangsspulen 10 und 20 zum Spurkranz bzw. Schienenkopf 50 hin wird eine besonders große Empfindlichkeit der Empfangsspulen erreicht; die entgegengesetzte Neigung der Kompensationsspulen 11, 12, 21 und 22 reduziert den Einfluss des Schienenkopfes 50 auf die Kompensationsspulen.

Die Figur 6 zeigt ein Ausführungsbeispiel für eine zweikanalige Sensoreinrichtung 1, bei der die Kompensationsspulen 11, 12, 21 und 22 jeweils weiter von der Sendespule 30 entfernt sind als die Empfangsspulen 10 und 20. Bei der Ausgestaltung gemäß Figur 6 können alle Spulen 10, 11, 12, 20, 21, 22 und 30 in derselben Ebene angeordnet sein und jeweils denselben vertikalen Abstand vom Schienenkopf 50 der Schiene 40 aufweisen. Bei dem Ausführungsbeispiel gemäß Figur 6 gehören die Spulen 10, 11 und 12 zu einem Empfangskanal und die Spulen 20, 21 und 22 zu einem zweiten Empfangskanal.

Obwohl die Erfindung im Detail durch bevorzugte Ausführungsbeispiele näher illustriert und beschrieben wurde, so ist die Erfindung nicht durch die offenbarten Beispiele eingeschränkt.

**Patentansprüche**

1. Sensoreinrichtung (1) zum Erfassen einer Magnetfeldänderung, die durch ein sich in einer Längsrichtung (L) der Sensoreinrichtung (1) annäherndes oder in der Längsrichtung (L) an der Sensoreinrichtung (1) vorbeibewegendes Objekt verursacht wird, wobei

   - die Sensoreinrichtung (1) eine Empfangsspule (10), eine bezogen auf die Längsrichtung (L) vor oder hinter der Empfangsspule (10) angeordnete wechselstromgespeiste Sendespule (30) und zwei Kompensationsspulen (11, 12), von denen eine bezogen auf die Längsrichtung (L) vor und die andere hinter der Sendespule (30) angeordnet ist, umfasst,
   - die zwei Kompensationsspulen (11, 12) jeweils von dem von der Sendespule (30) erzeugten Magnetfeld durchsetzt werden und elektrisch derart in Reihe verschaltet sind, dass die durch das Magnetfeld der Sendespule (30) induzierten Spannungen in den beiden Kompensationsspulen (11, 12) vorzeichenverschieden sind, und
   - die Empfangsspule (10) und die zwei Kompensationsspulen (11, 12) elektrisch in Reihe geschaltet sind, wobei die elektrische Polung der Empfangsspule und der zwei Kompensationsspulen derart gewählt ist, dass ein auf die Empfangsspule (10) und die zwei Kompensationsspulen (11, 12) einwirkendes magnetisches Störfeld (M) in der Empfangsspule (10) eine Spannung mit einem anderen Vorzeichen als in Summe in den beiden Kompensationsspulen (11, 12) induziert.

2. Sensoreinrichtung (1) nach Anspruch 1, wobei

   - die Längsachsen (L10, L11, L21) der Empfangsspule (10) und der zwei Kompensationsspulen (11, 12) jeweils senkrecht oder zumindest im Wesentlichen senkrecht zur Längsachse (L30) der Sendespule (30) ausgerichtet sind, und
   - die Längsachse (L30) der Sendespule (30) parallel oder zumindest im Wesentlichen parallel zur Längsrichtung (L) der Sensoreinrichtung (1) ausgerichtet ist.

3. Sensoreinrichtung (1) nach einem der voranstehenden Ansprüche, wobei die zwei Kompensationsspulen (11, 12) jeweils derart angeordnet und/oder dimensioniert sind, dass das von der Sendespule (30) erzeugte Magnetfeld in den beiden Kompensationsspulen (11, 12) gleich große Spannungen mit unterschiedlichem Vorzeichen induziert.

4. Sensoreinrichtung (1) nach einem der voranstehenden Ansprüche, wobei die zwei Kompensationsspulen (11, 12) baugleich sind und bezüglich der Sendespule (30) spiegelsymmetrisch angeordnet sind.

5. Sensoreinrichtung (1) nach einem der voranstehenden Ansprüche, wobei die Empfangsspule (10) und die zwei Kompensationsspulen (11, 12) derart angeordnet und/oder dimensioniert sind, dass

   - die von dem magnetischen Störfeld (M) in der Empfangsspule (10) induzierte Spannung so groß ist wie die Summenspannung, die durch die in den zwei Kompensationsspulen (11, 12) induzierten Spannungen gebildet wird, und
   - die durch das Störfeld (M) induzierte Spannung an der Reihenschaltung bestehend aus der Empfangsspule (10) und den zwei Kompensationsspulen (11, 12) Null oder zumindest näherungsweise Null beträgt.

6. Sensoreinrichtung (1) nach einem der voranstehenden Ansprüche, wobei zumindest ein Kondensator (C2) parallel zu der Reihenschaltung der zwei Kompensationsspulen (11, 12) geschaltet ist und mit diesen einen Kompensationsschwingkreis (SK) bildet, zumindest ein Kondensator (C1) parallel zu der Empfangsspule (10) geschaltet ist und mit dieser einen Empfangsschwingkreis (SE) bildet, und die Resonanzfrequenz des Kompensationsschwingkreises (SK) und die Resonanzfrequenz des Empfangsschwingkreises (SE) gleich sind oder sich zumindest der Resonanzfrequenzbereich des Kompensationsschwingkreises (SK) mit dem Resonanzfrequenzbereich des Empfangsschwingkreises (SE) überlappt.

7. Sensoreinrichtung (1) nach einem der voranstehenden Ansprüche, wobei zumindest eine der Kompensationsspulen (11, 12) und/oder die Empfangsspule (10) durch zwei oder mehr Teilspulen gebildet ist, die miteinander elektrisch verschaltet sind.

8. Sensoreinrichtung (1) nach einem der voranstehenden Ansprüche, wobei

   - die Sensoreinrichtung (1) zweikanalig ist,
   - die zwei Kompensationsspulen (11, 12) und die Empfangsspule (10) einen ersten Kanal der Sensoreinrichtung (1) bilden,
   - zwei weitere Kompensationsspulen (21, 22) und eine weitere Empfangsspule (20) einen zweiten Kanal der Sensoreinrichtung (1) bilden,
   - eine der zwei weiteren Kompensationsspulen (21, 22) vor und die andere hinter der Sendespule (30) angeordnet ist, und
   - die Sendespule (30) zwischen den Empfangsspulen (10, 20) angeordnet ist.

9. Anordnung mit einer Schiene (40), insbesondere Eisenbahnschiene, und einer Sensoreinrichtung (1), wobei die Sensoreinrichtung (1) eine Sensoreinrichtung (1) nach einem der voranstehenden Ansprüche ist und die Sensoreinrichtung (1) derart an der Schiene (40) montiert ist, dass die Längsrichtung (L) der Sensoreinrichtung (1) der Schienenlängsrichtung entspricht.

10. Anordnung nach Anspruch 9, wobei die Empfangsspule (10) bzw. die Empfangsspulen (10, 20) und die Sendespule (30) in derselben horizontalen Ebene liegen.

11. Anordnung nach einem der voranstehenden Ansprüche 9 bis 10, wobei die Kompensationsspulen (11, 12) in derselben horizontalen Ebene liegen.

12. Anordnung nach einem der voranstehenden Ansprüche 9 bis 11, wobei der Abstand der Kompensationsspulen (11, 12) vom Schienenkopf größer als der Abstand der Empfangsspule (10) bzw. der Empfangsspulen (10, 20) vom Schienenkopf ist.

13. Anordnung nach einem der voranstehenden Ansprüche 9 bis 12, wobei die Kompensationsspulen (11, 12) in einer horizontalen Ebene (80) liegen, die tiefer liegt als die horizontale Ebene (90), in der die Empfangsspule (10) bzw. die Empfangsspulen (10, 20) und die Sendespule (30) liegen.

14. Anordnung nach einem der voranstehenden Ansprüche 9 bis 13, wobei die Empfangsspule (10) bzw. die Empfangsspulen (10, 20) und die Kompensationsspulen (11, 12) jeweils relativ zur Horizontalen bzw. deren Längsachsen (L10, L11, L21) relativ zur Vertikalen geneigt sind, wobei die Empfangsspule (10) bzw. die Empfangsspulen (10, 20) dem Schienenkopf zugewandt sind und die Kompensationsspulen (11, 12) dem Schienenkopf abgewandt sind.

## Claims

1. Sensor device (1) for sensing a change in a magnetic field, which change is caused by an object approaching the sensor device (1) in a longitudinal direction (L) or moving past the sensor device (1) in the longitudinal direction (L), wherein

- the sensor device (1) comprises a receiving coil (10), an AC-fed transmitting coil (30) arranged upstream or downstream of the receiving coil (10) based on the longitudinal direction (L) and two compensation coils (11, 12), one of which is arranged upstream of the transmitting coil (30) and the other of which is arranged downstream of the transmitting coil (30) based on the longitudinal direction (L),
- the two compensation coils (11,12) are each permeated by the magnetic field generated by the transmitting coil (30) and are electrically connected in series in such a manner that the voltages induced in the two compensation coils (11, 12) by the magnetic field of the transmitting coil (30) have different signs, and
- the receiving coil (10) and the two compensation coils (11, 12) are electrically connected in series, wherein the electrical polarity of the receiving coil and the two compensation coils is selected in such a manner that a magnetic interference field (M) acting on the receiving coil (10) and the two compensation coils (11, 12) induces a voltage in the receiving coil (10) with a sign which differs from that altogether in the two compensation coils (11, 12).

2. Sensor device (1) according to claim 1, wherein

   - the longitudinal axes (L10, L11, L21) of the receiving coil (10) and the two compensation coils (11, 12) are each aligned perpendicular or at least essentially perpendicular to the longitudinal axis (L30) of the transmitting coil (30), and
   - the longitudinal axis (L30) of the transmitting coil (30) is aligned parallel or at least essentially parallel to the longitudinal direction (L) of the sensor device (1).

3. Sensor device (1) according to one of the preceding claims, wherein
   the two compensation coils (11, 12) are each arranged and/or dimensioned in such a manner that the magnetic field generated by the transmitting coil (30) induces equally large voltages with different signs in the two compensation coils (11, 12).

4. Sensor device (1) according to one of the preceding claims, wherein
   the two compensation coils (11, 12) have the same construction and are arranged in mirror symmetry with regard to the transmitting coil (30).

5. Sensor device (1) according to one of the preceding claims,
   wherein
   the receiving coil (10) and the two compensation coils (11, 12) are arranged and/or dimensioned in such a manner that

   - the voltage induced in the receiving coil (10) by the magnetic interference field (M) is as large as the sum voltage formed by the voltages induced in the two compensation coils (11, 12), and
   - the voltage induced by the interference field (M) has a value of zero or at least approximately zero at the series connection consisting of the receiving coil (10) and the two compensation coils (11, 12).

6. Sensor device (1) according to one of the preceding claims,
   wherein
   at least one capacitor (C2) is connected in parallel with the series connection of the two compensation coils (11, 12) and together with same forms a compensating oscillating circuit (SK), at least one capacitor (C1) is connected in parallel with the receiving coil (10) and together with same forms a receiving oscillating circuit (SE), and the resonance frequency of the compensating oscillating circuit (SK) and the resonance frequency of the receiving oscillating circuit (SE) are the same or the resonance frequency range of the compensating oscillating circuit (SK) at least overlaps with the resonance frequency range of the receiving oscillating circuit (SE).

7. Sensor device (1) according to one of the preceding claims
   wherein
   at least one of the compensation coils (11, 12) and/or the receiving coil (10) is formed out of two or more coil sections which are electrically connected to each other.

8. Sensor device (1) according to one of the preceding claims,
   wherein

   - the sensor device (1) is two-channel,
   - two compensation coils (11, 12) and the receiving coil (10) form a first channel of the sensor device (1),
   - two further compensation coils (21, 22) and a further receiving coil (20) form a second channel of the sensor device (1),
   - one of the two further compensation coils (21, 22) is arranged upstream and the other downstream of the transmitting coil (30), and
   - the transmitting coil (30) is arranged between the receiving coils (10, 20).

**9.** Arrangement with a rail (40), in particular a railroad rail and a sensor device (1), wherein the sensor device (1) is a sensor device (1) according to one of the preceding claims and the sensor device (1) is mounted on the rail (40) in such a manner that the longitudinal direction (L) of the sensor device (1) corresponds to the longitudinal direction of the rail.

**10.** Arrangement according to claim 9, wherein the receiving coil (10) or receiving coils (10, 20) and the transmitting coil (30) lie in the same horizontal plane.

**11.** Arrangement according to one of the preceding claims 9 to 10, wherein the compensation coils (11, 12) lie in the same horizontal plane.

**12.** Arrangement according to one of the preceding claims 9 to 11 wherein the spacing of the compensation coils (11, 12) from the rail head is greater than the spacing of the receiving coil (10) or receiving coils (10, 20) from the rail head.

**13.** Arrangement according to one of the preceding claims 9 to 12, wherein the compensation coils (11, 12) lie in a horizontal plane (80) that lies at a deeper level than the horizontal plane (90) in which the receiving coil (10) or receiving coils and the transmitting coil (30) lie.

**14.** Arrangement according to one of the preceding claims 9 to 13, wherein the receiving coil (10) or receiving coils (10, 20) and the compensation coils (11, 12) are each inclined relative to the horizontal, or respectively their longitudinal axes (L10, L11, L21) relative to the vertical, wherein the receiving coil (10) or receiving coils (10, 20) face toward the rail head and the compensation coils (11, 12) face away from the rail head.

**Revendications**

**1.** Dispositif (1) capteur de détection d'une variation d'un champ magnétique, qui est provoquée par un objet se rapprochant dans une direction (L) longitudinale du dispositif (1) capteur ou passant dans la direction (L) longitudinale devant le dispositif (1) capteur, dans lequel

- le dispositif (1) capteur comprend une bobine (10) de réception, une bobine (30) d'émission alimentée en courant alternatif et, rapportée à la direction (L) longitudinale, disposée devant ou derrière la bobine (10) de réception, et deux bobines (11, 12) de compensation, dont l'une est disposée, rapportée à la direction (L) longitudinale, avant et l'autre derrière la bobine (30) d'émission,
- les deux bobines (11, 12) de compensation sont traversées chacune par le champ magnétique produit par la bobine (30) d'émission et sont montées électriquement en série, de manière à ce que les tensions, induites par le champ magnétique, de la bobine (30) d'émission soient de signe différent dans les deux bobines (11, 12) de compensation et
- la bobine (10) de réception et les deux bobines (11, 12) de compensation sont montées électriquement en série, la polarité électrique de la bobine de réception et des deux bobines de compensation étant choisie, de manière à ce qu'un champ (M) magnétique parasite s'appliquant à la bobine (10) de réception et aux deux bobines (11, 12) de compensation induise dans la bobine (10) de réception une tension ayant un signe autre que, en somme, dans les deux bobines (11, 12) de compensation.

**2.** Dispositif (1) capteur suivant la revendication 1, dans lequel

- les axes (L10, L11, L21) longitudinaux de la bobine (10) de réception et des deux bobines (11, 12) de compensation sont dirigés sensiblement perpendiculairement ou au moins sensiblement perpendiculairement à l'axe (L30) longitudinal de la bobine (30) d'émission, et
- l'axe (L30) longitudinal de la bobine (30) d'émission est dirigé parallèlement ou au moins sensiblement parallèlement à la direction (L) longitudinale du dispositif (1) capteur.

**3.** Dispositif (1) capteur suivant l'une des revendications précédentes, dans lequel les deux bobines (11, 12) de compensation sont disposées et/ou dimensionnées chacune de manière à ce que le champ magnétique, produit par la bobine (30) d'émission, induise dans les deux bobines (11, 12) de compensation des tensions égales de signes différents.

**4.** Dispositif (1) capteur suivant l'une des revendications précédentes, dans lequel les deux bobines (11, 12) de compensation sont de construction pareille et sont disposées d'une manière symétrique comme en un miroir par rapport à la bobine (30) d'émission.

5. Dispositif (1) capteur suivant l'une des revendications précédentes,
dans lequel
la bobine (10) de réception et les deux bobines (11, 12) de compensation sont disposées et/ou dimensionnées de manière à ce que

- la tension induite par le champ (M) magnétique parasite dans la bobine (10) de réception soit aussi grande que la tension somme, qui est formée par les tensions induites dans les deux bobines (11, 12) de compensation, et
- la tension induite par le champ (M) parasite sur le circuit série constitué de la bobine (10) de réception et des deux bobines (11, 12) de compensation soit nulle ou au moins à peu près nulle.

6. Dispositif (1) capteur suivant l'une des revendications précédentes,
dans lequel
au moins un condensateur (C2) est monté en parallèle au circuit (C1) série des deux bobines (11, 12) de compensation et forme avec celles-ci un circuit (SK) oscillant de compensation, au moins un condensateur (C1) est monté en parallèle à la bobine (10) de réception et forme avec celle-ci un circuit (SE) oscillant de réception et la fréquence de résonnance du circuit (SK) oscillant de compensation et la fréquence de résonnance du circuit (SE) oscillant de réception sont égales ou au moins la plage de fréquence de résonnance du circuit (SK) oscillant de compensation chevauche la plage de fréquences de résonnance du circuit (SE) oscillant de réception.

7. Dispositif (1) capteur suivant l'une des revendications précédentes, dans lequel
au moins l'une des bobines (11, 12) de compensation et/ou la bobine (10) de réception est formée de deux ou plusieurs bobines partielles, qui sont montées électriquement entre elles.

8. Dispositif (1) capteur suivant l'une des revendications précédentes, dans lequel

- le dispositif (1) capteur est à deux canaux,
- les deux bobines (11, 12) de compensation et la bobine (10) de réception forment un premier canal du dispositif (1) capteur,
- deux autres bobines (21, 22) de compensation et une autre bobine (20) de réception, forment un deuxième canal du dispositif (1) capteur,
- l'une des deux autres bobines (21, 22) de compensation est montée devant et l'autre derrière la bobine (30) d'émission, et

- la bobine (30) d'émission est montée entre les bobines (10, 20) de réception.

9. Agencement comprenant un rail (10), notamment un rail de chemin de fer, et un dispositif (1) capteur,
dans lequel
le dispositif (1) capteur est un dispositif (1) capteur suivant l'une des revendications précédentes, et le dispositif (1) capteur est monté sur le rail (40) de manière à ce que la direction (L) longitudinale du dispositif (1) capteur corresponde à la direction longitudinale du rail.

10. Agencement suivant la revendication 9, dans lequel la bobine (10) de réception et respectivement les bobines (10, 20) de réception et la bobine (30) d'émission sont dans le même plan horizontal.

11. Agencement suivant l'une des revendications 9 à 10 précédentes,
dans lequel
les bobines (11, 12) de compensation sont dans le même plan horizontal.

12. Agencement suivant l'une des revendication 9 à 11 précédentes,
dans lequel
la distance des bobines (11, 12) de compensation au champignon du rail est plus grande que la distance de la bobine (10) de réception ou des bobines (10, 20) de réception au champignon du rail.

13. Agencement suivant l'une des revendications 9 à 12 précédentes,
dans lequel
les bobines (11, 12) de compensation se trouvent dans un plan (80) horizontal qui est plus bas que le plan (90) horizontal, dans lequel se trouve la bobine (10) de réception ou les bobines (10, 20) de réception et la bobine (30) d'émission.

14. Agencement suivant l'une des revendications 9 à 13 précédentes,
dans lequel
la bobine (10) de réception ou les bobines (10, 20) de réception et les bobines (11, 12) de compensation sont chacune inclinées par rapport à l'horizontale ou leurs axes (L10, L11, L21) longitudinaux sont inclinés par rapport à la verticale, la bobine (10) de réception ou les bobine (10, 20) de réception étant tournées vers le champignon du rail et les bobines (11, 12) de compensation étant loin du champignon du rail.

## FIG 1

## FIG 2

FIG 3

FIG 4

## FIG 5

120

50

40

10   L10

90

70

L11   A   L21

80

11   21

## FIG 6

40

50

11

22

21

12

10   70   30   20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10137519 A1
- DE 102014207409 A1